# NEUE EUROPÄISCHE PATENTSCHRIFT

(11) **EP 0 443 124 B2**
(45) Veröffentlichungstag und Bekanntmachung des Hinweises auf die Entscheidung über den Einspruch: **30.06.1999**
(45) Hinweis auf die Patenterteilung: 25.08.1993
(21) Anmeldenummer: 90123366.8
(22) Anmeldetag: 06.12.1990
(51) Int. Cl.: B60T 8/18

(54) **Lastabhängiger Bremskraftregler für Druckluftbremsanlagen in luftgefederten Fahrzeugen, insbesondere Nutzfahrzeugen**
Load-dependent brake force regulator for compressed air brake systems in vehicles with pneumatic suspension, especially commercial vehicles
Régulateur de force de freinage en fonction de la charge pour systèmes de freinage à air comprimé dans des véhicules à suspension pneumatique, notamment des véhicules utilitaires

(30) Priorität: 22.02.1990 DE 4005664
(43) Veröffentlichungstag der Anmeldung: 28.08.1991
(73) Patentinhaber: KNORR-BREMSE AG, 80710 München (DE)
(72) Erfinder: Mus, Yves, F-77450 Montry (FR)

(56) Entgegenhaltungen:
- EP-A- 0 058 413
- DE-A- 1 934 784
- DE-A- 2 129 325
- DE-A- 3 032 802
- DE-B- 2 306 154
- FR-A- 2 170 982
- H.-P. Klug: "NUTZFAHRZEUGBREMSANLAGEN" 1986, VOGEL Buchverlag, Würzburg
- PATENT ABSTRACTS OF JAPAN vol. 12, no. 78 (M-675)(2925) 11 März 1988,& JP-A-62 218254 (TOKICO) 25 September 1987

## Beschreibung

Die Erfindung betrifft einen lastabhängigen Bremskraftregler nach dem Gattungsbegriff des Patentanspruches 1, z.B. gemäß DE-A1-30 32 802.

Bremskraftregler der gattungsgemäßen Art werden in Zugfahrzeugen, aber auch in Anhänger-Fahrzeugen verwendet, so z.B. an der Vorderachse des Fahrzeuges; die Vorderachse ist jedoch in stärkerem Maße als die Hinterachse beim Bremsverzögern des Fahrzeuges dynamischen Achslastverlagerungen ausgesetzt. Die durch die dynamischen Achslastverlagerungen verursachten starken Nickbewegungen der Vorderachse könnten Einstellungen des Bremskrafteglers verursachen, welche zu progressiv fortschreitenden Abbremsungen führen können.

Um diesem Problem zu begegnen, wurden bereits Einrichtungen zum (DE-A-19 34 784) Fixieren des Stellgliedes des Bremskraftreglers geschaffen, welche einen das Stellglied des Bremskraftreglers umgebenden Feder-Klemmring und einen koaxial zum Stellglied angeordneten, in axialer Richtung mit dem Klemmring in Wirkverbindung bringbaren Kolben aufweisen. Wird der Kolben mitdem Bremsdruck beaufschlagt und auf diese Weise gegen den Feder-Klemmring gedrückt, so wird das Stellglied infolge der Reduzierung des Innendurchmessers des Feder-Klemmringes in seiner momentanen Position arretiert, bis der Bremsdruck wieder weggenommen wird.

Einrichtungen dieser bekannten Art sind baulich verhältnismäßig aufwendig geschaffen, d.h. es sind innerhalb des Bremskraftreglergehäuses Klemmund Stellglieder erforderlich, welche nicht immer ein zeitgenaues Fixieren des Stellgliedes gewährleisten. Im besonderen können auch Probleme an den Dichtungen auftreten, welche im allgemeinen mit Spiel eingebaut werden müssen, wobei zur Vermeidungen von Stauchungen und daraus resultierenden Unebenheiten in der Anlagefläche ein Verschieben des Stellgliedes in axialer Richtung während des Klemmvorganges nicht vollständig ausgeschlossen werden kann.

Davon ausgehend besteht die Aufgabe der Erfindung darin, Bremskraftregler der gattungsgemäßen Art mit baulich einfachen Mitteln so auszugestalten, daß das Fixieren des Stellgliedes innerhalb kürzester Zeit sicher und wirksam herbeigeführt werden kann, ohne daß die in Verbindung mit Dichtungen und Klemmpaarungen auftretenden Probleme in Kauf genommen werden müßten.

Zur Lösung dieser Aufgabe dienen die Merkmale nach dem Kennzeichnungsteil des Patentanspruches 1.

Die Vorrichtung zur Überführung des Bremskraftreglers von dynamischer Wirkungsweise in statische Wirkungsweise ist baulich einfach beschaffen, da es lediglich eines einfachen Sperrschiebers oder dgl. Ventileinrichtung bedarf, die sich in der Verbindung zwischen dei den lastabhängigen Steuerdruck führenden Luftfederbälgen des Fahrzeuges und dem den Steuerkörper beaufschlagenden Regler- bzw. Tandemkolben befindet und vorzugsweise vom eingesteuerten Bremsdruck beaufschlagbar ist, derart, daß bei Bremsbetätigung sofort der zuvor am Tandemkolben wirkende Druck gefangen, also gesperrt, und demzufolge das vom Steuerkörper beeinflußte Stellglied in seiner Lage fixierbar ist. Dem Schieber ist in der Verbindung zum Einlaß des Bremskraftreglers ein manuell betätigbares Ventil vorgeschaltet, welches zwischen geöffneter Lage und Sperrlage betätigbar ist, um wahlweise die Funktionen "dynamischer Bremskraftregler" oder "statischer Bremskraftregler" einzustellen.

Vorteilhafte Ausgestaltungen und Weiterbildungen sind in weiteren Patentansprüchen aufgeführt.

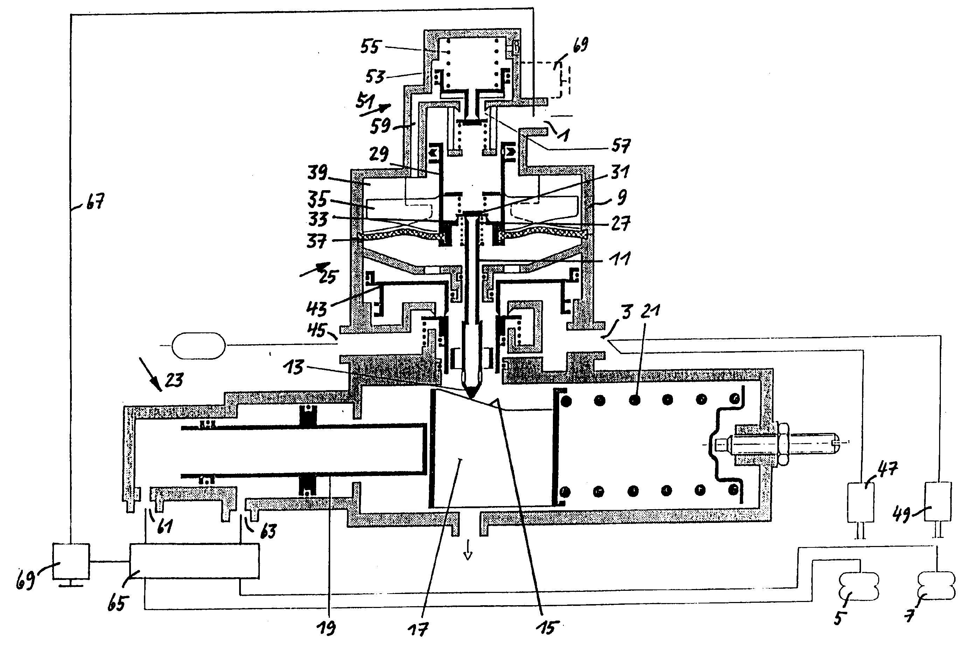

Die Erfindung ist nachfolgend anhand eines Ausführungsbeispiels unter Bezugnahme auf die beigefügte Zeichnung erläutert. Die Zeichnung gibt schematisch im Längsschnitt einen Bremskraftregler gemäß der Erfindung wieder.

In der Zeichnung ist ein lastabhängiger Bremskraftregler dargestellt, welcher pneumatisch angesteuert wird; hierbei wird ein eingesteuerter Bremsdruck p4 am Einlaß 1 auf einen ausgesteuerten Bremsdruck p2 am Auslaß 3 reduziert. Die Druckreduzierung erfolgt proportional zum mittleren Druck der rechten und linken Luftfederbälge 5 und 7 an den beiden Fahrzeugseiten.

Der in der Zeichnung dargestellte, an sich bekannte Bremskraftregler weist innerhalb seines Gehäuses 9 einen Stößel 11 auf, welcher mit seinem unteren Ende 13 auf einer Steuerkurve 15 des Steuerkörpers 17 gleitet. Der Steuerkörper 17 ist durch einen Tandemkolben 19 entgegen der Kraft einer Regelfeder 21 bewegbar, dererart, daß die Höhenlage des Stößels 11 durch die Position des Steuerkörpers 17 in Abhängigkeit vom Druck in den Luftfederbälgen 5 und 7 bestimmt ist.

Der Stößel 11 stellt die Verbindung zwischen dem den Tandemkolben 19 aufweisenden Steuerteil 23 mit dem im Inneren des Gehäuses befindlichen Bremsluftteil 25 her; das obere Ende 27 des Stößels 11 bildet mit einem an einem Stufenkolben 29 geführten Doppelventilkörper 31 ein Auslaßventil, während ein als Bestandteil des Stufenkolbens ausgebildeter Ventilsitz 33 mit dem Doppelventilkörper 31 ein Einlaßventil bildet.

Mit dem Stufenkolben 29 ist eine Anzahl radialer Rippen 35 verbunden, deren der Membran 37 des Stufenkolbens zugewandte Stirnfläche Teile eines Kegelmantels bilden. Im Gehäuse 9 ist fernerhin eine Anzahl radialer Rippen 39 geführt, welche fixiert sind und in deren Zwischenräume die Rippen 35 berührungslos eingreifen. Die der Membran 37 zugewandten Stirnflächen der Rippen 39 bilden Teile eines entgegengesetzten Kegelmantels. Mit dieser Anordnung wird der am Einlaß 1 z.B: von einem Fußbremsventil eingesteuerte Bremsdruck um ein variierbares Verhältnis reduziert und beaufschlagt bei geöffnetem Einlaßventil den Kolben 43 eines im Gehäuse 9 integrierten Relaisventils. Am Anschluß 45 steht der Vorratsdruck an, welcher bei geöffnetem Relaisventil über den Auslaß 3 zu den Bremszylindern 47 und 49 gelangt.

Im Gehäuse ist fernerhin ein Ventil 51 integriert, welches die beladungsabhängige Reduzierung des eingesteuerten Bremsdruckes im unteren Druckbereich aufhebt. Die auf den Kolben 53 wirkende Druckfeder 55 hält beim Bremsen, d.h. beim Anlegen eines eingesteuerten Bremsdruckes p4, bis zum gewünschten Anlegedruck den Ventilsitz 57 offen, wobei sich über die Bohrung 59 der Druck über der Membran 37 aufbaut, d.h. daß bis zum Anlegedruck die Reduzierung verhindert wird.

Die insoweit beschriebene Funktionsweise des Bremskraftreglers entspricht der dynamischen Auslegung, d.h., daß in den Bremskraftregler und somit in die Betätigung des Bremsluftteils ständig eine lastabhängige Größe eingeht, welche durch die Luftfederbälge 5 und 7 deren Einflußnahme auf den Steuerteil 23 verursacht wird.

Erfindungsgemäß ist der Bremskraftregler mit Mitteln versehen, welche es gestatten, von der dynamischen Wirkungsweise zu einer statischen Wirkungsweise umzuschalten. Gemäß Darstellung ist in der Verbindung zwischen den Luftfederbälgen 5 und 7 und den Anschlüssen 61 und 63 des Steuerteils 23 ein schematisch wiedergegebener Schieber 65 vorgesehen, welcher in einer Position die Verbindung zwischen den Luftfederbälgen und den Anschlüssen 61 und 63 sperrt und in der anderen Position diese Verbindung freigibt. Der Schieber ist durch pneumatischen Druck entgegen der Kraft (einer nicht dargestellten Feder) aus der geöffneten Position in die geschlossene Position verschiebbar. Der pneumatische Druck wird gemäß der Erfindung vom eingesteuerten Bremsdruck p4 abgeleitet, d.h. bei Bremsbetätigung und Druckbeaufschlagung des Bremskraftreglers gelangt der eingesteuerte Bremsdruck über die Leitung 67 und ein zwischen geöffneter und geschlossener Position betätigbares Ventil 69 in den Schieber und beaufschlagt diesen in vorstehend beschriebener Weise. Bei Bremsbetätigung wird somit unmittelbar die Überführung vom dynamischen Regler in den statischen Regler vollzogen. Das Ventil 69 ist manuell betätigbar und kann jeder beliebigen Ausführungsform entsprechen, d.h. durch manuelle Betätigung des Ventils 69 wird dieses entweder in geöffnete oder geschlossene Lage gebracht, so daß es in geschlossener Lage ständig die Verbindung zwischen der Leitung 67 und dem Schieber 65 sperrt und hierdurch die dynamische Funktionsweise des Reglers festgelegt ist. Im Falle der Verwendung des Reglers für statische Funktionsweise wird das Ventil 69 manuell geöffnet und gibt dementsprechend die Verbindung zwischen der Leitung 67 bzw. dem Einlaß 1 und dem Schieber 65 frei, derart, daß dieser im Moment der Bremsbetätigung aus seiner geöffneten Lage in seine geschlossene, d.h. Sperrlage verlagert wird. In dieser Sperrlage ist folglich innerhalb des Steuerteils 23 der Druck gefangen, welcher kurz zuvor entsprechend Beaufschlagung seitens der Luftfederbälge 5 und 7 existiert hat. In weiterer Folge ist somit die Axialposition, d.h. die Höhenlage des Stößels 11 fixierbar und der Bremskraftregler regelt bei Abbremsung entsprechend der fixierten Position des Stößels 11 aus.

Die insoweit beschriebene Vorrichtung zur Überführung eines dynamischen Reglers in einen statischen Regler ist von sehr einfachem Aufbau, da der Schieber 65 jeder beliebigen, im Handel erhältlichen Ausführungsform entsprechen kann und auch das Ventil 69 gleichfalls von einfachster Konstruktion sein kann. Das Ventil 69 kann zusammen mit dem Schieber 65 in einer Baueinheit integriert sein, es kann jedoch auch am Gehäuse 9 des Bremskraftreglers integriert sein, wie dies durch gestrichelte Linienführung im Bereich des Einlaßes 1 angedeutet ist.

Der nur beispielsweise als Absperrorgan erläuterte Schieber 65 kann mit dem Gehäuse des Steuerteils 23 verbunden sein bzw. mit diesem eine Baueinheit bilden, wobei ein an sich bekanntes Prüfventil verwendet werden kann, d.h. eine einem Schieber vergleichbare Einrichtung, welche normalerweise die Verbindung zwischen dem Steuerteil und den Luftfederbälgen freigibt, bei Fixieren einer Prüfleitung jedoch diese Verbindung sperrt und statt dessen eine Verbindung zwischen der mit dem Prüfanschluß verbundenen Prüfleitung und dem Steuerteil 23 herstellt.

### Bezugszeichenliste

- 1: Einlaß
- 3: Auslaß
- 5: Luftfederbalg
- 7: Luftfederbalg
- 9: Gehäuse
- 11: Stößel
- 13: Ende
- 15: Steuerkurve
- 17: Steuerkörper
- 19: Tandemkolben
- 21: Regelfeder
- 23: Steuerteil
- 25: Bremsluftteil
- 27: Ende
- 29: Stufenkolben
- 31: Doppelventilkörper
- 33: Ventilsitz
- 35: Rippe
- 37: Membran
- 39: Rippe
- 43: Kolben
- 45: Anschluß
- 47: Bremszylinder
- 49: Bremszylinder
- 51: Ventil
- 53: Kolben
- 55: Feder
- 57: Ventilsitz
- 59: Bohrung
- 61: Anschluß
- 63: Anschluß
- 65: Schieber
- 67: Leitung
- 69: Ventil

## Patentansprüche

1. Lastabhängiger Bremskraftregler für Druckluftbremsanlagen in luftgefederten Fahrzeugen, insbesondere Nutzfahrzeugen, mit einem vom lastabhängigen Druck der Luftfederbälge (5,7) beeinflußten Steuerkörper (17), welcher eine Regelgröße von Leerlast bis Vollast mittels eines gegenüber einem Bremsluftteil (25) des Reglers wirkenden Stellgliedes einstellt, wobei sich das Stellglied auf einer Steuerkurve (15) des Steuerkörpers (17) abstützt und dieser gegen die Kraft einer Regelfeder (21) von einem lastabhängig durch die Luftfederbälge (5,7) beaufschlagbaren Tandemkolben (19) verschiebbar ist, **dadurch gekennzeichnet,** daß die Verbindung von den Luftfederbälgen (5,7) zum Tandemkolben (19) bei Bremsbetätigung durch den eingesteuerten Bremsdruck des Bremskraftreglers absperrbar ist, so daß eine Umschaltung des Bremskraftreglers von dynamischer Wirkungsweise in statische Wirkungsweise erfolgt.

2. Bremskraftregler nach Anspruch 1, dadurch gekennzeichnet, daß in der Verbindung zwischen den Luftfederbälgen (5,7) und dem Tandemkolben (19) ein durch den eingesteuerten Bremsdruck des Bremskraftreglers gegen Federkraft in Sperrlage verschiebbarer Schieber (65) angeordnet ist, und daß sich in der Leitungsverbindung zwischen dem den eingesteuerten Bremsdruck führenden Einlaß (1) des Bremskraftreglers und dem Schieber (65) ein manuell zwischen geöffneter Position und Sperrlage betätigbares Ventil (69) befindet.

3. Bremskraftregler nach Anspruch 2, dadurch gekennzeichnet, daß der Schieber (65) mit dem Gehäuse des den Tandemkolben (19) aufnehmenden Steuerteils (23) des Bremskraftreglers verbunden ist.

4. Bremskraftregler nach einem der Ansprüche 2 oder 3, dadurch gekennzeichnet, daß der Schieber (65) durch das am Bremskraftregler integrierte Prüfventil gebildet ist, wobei das Absperrorgan des Prüfventils an dem dem Prüfanschluß entgegengesetzten Ende durch den eingesteuerten Bremsdruck des Bremskraftreglers entgegen Federkraft beaufschlagbar ist, um die Verbindung zwischen den Luftfederbälgen und dem Tandemkolben (19) zu sperren.

5. Bremskraftregler nach einem der Ansprüche 2-4, dadurch gekennzeichnet, daß das in der Druckmittelverbindung zwischen dem Einlaß (1) des Bremskraftreglers und dem Schieber (65) befindliche Ventil (69) baulich am Bremskraftregler integriert ist.

## Claims

1. Load-dependent brake force regulator for compressed-air brake systems in vehicles with pneumatic suspension, in particular commercial vehicles, having a control body (17) acted upon by the load-dependent pressure of the pneumatic spring bellows (5, 7), which control body adjusts a controlled variable from zero load to full load by means of an actuator acting with respect to a brake air portion (25) of the regulator, with said actuator being supported on a control cam (15) of said control body (17) and with the latter being displaceable against the force of a control spring (21) of a tandem piston (19) which can be acted upon in a load-dependent manner by said pneumatic spring bellows (5, 7), **characterised in** that the connection from said pneumatic spring bellows (5, 7) to said tandem piston (19) is adapted to be blocked upon actuation of the brake by the regulated brake pressure of the brake force regulator so that the brake force regulator will be changed over from a dynamic mode to a static mode.

2. Brake force regulator according to Claim 1, characterised in that in the connection between said pneumatic spring bellows (5, 7) and said tandem piston (19) a slide valve (65) is disposed which can be displaced by the controlled brake pressure of the brake force regulator against a spring force into the blocking position, and that in the line connection between the inlet (1) of the brake force regulator, which carries the controlled brake pressure, and said slide valve (65) a valve (69) is provided which can be manually actuated between an opened position and a blocking position.

3. Brake force regulator according to Claim 2, characterised in that said slide valve (65) is connected to the housing of the control part (23) of the brake force regulator, which receives said tandem piston (19).

4. Brake force regulator according to any of the Claims 2 or 3, characterised in that said slide valve (65) is formed by the test valve integrated on the brake force regulator, with the shut-off element of said test valve being adapted to be acted upon by the controlled brake pressure of the brake force regulator against a spring force, on the end opposite to the test connector, for blocking the connection between said pneumatic spring bellows and said tandem piston (19).

5. Brake force regulator according to any of the Claims 2 to 4, characterised in that said valve (69) which is provided in the pressurised-medium connection between said inlet (1) of the brake force regulator and said slide valve (65), is structurally integrated on the brake force regulator.

## Revendications

1. Régulateur de puissance de freinage en fonction de la charge pour des systèmes de freinage à air comprimé dans des véhicules à suspension pneumatique, en particulier des véhicules utilitaires, comprenant un corps de commande (17) soumis à l'action de la pression en fonction de la charge des coussins d'air pneumatiques (5, 7), lequel corps de commande ajuste une variable commandée du niveau de charge à vide jusqu'au niveau de pleine charge moyennant un organe final agissant, relativement à une partie d'air de freinage (25) du régulateur, ledit organe final s'appuyant sur une came de commande (15) dudit corps de commande (17) et le dernier étant déplaçable à l'encontre de la force d'un ressort régulateur (21) d'un piston tandem (19) sur lequel on peut agir, en fonction de la charge, par lesdits coussins d'air pneumatiques (5, 7), **caractérisé en ce** que le raccord à partir desdits coussins d'air pneumatiques (5, 7) vers ledit piston tandem (19) peut être bloqué, suivant l'actionnement des freins par la pression de freinage réglée du régulateur de puissance de freinage de façon que le régulateur de puissance de freinage soit changé d'un mode dynamique à un mode statique.

2. Régulateur de puissance de freinage selon la revendication 1, caractérisé en ce que dans le raccord entre lesdits coussins d'air pneumatiques (5, 7) et ledit piston tandem (19) une soupape à tiroir (65) est disposée, qui est déplaçable par la pression de freinage réglée du régulateur de puissance de freinage, à l'encontre de la force d'un ressort, dans la position d'arrêt , et en ce que dans le raccordement de conduite entre l'entrée (1) du régulateur de puissance de freinage, qui porte la pression de freinage réglée, et ladite soupape à tiroir (65) une soupape (69) est disposée qui est commandable à la main entre une position d'ouverture et une position d'arrêt.

3. Régulateur de puissance de freinage selon la revendication 2, caractérisé en ce que ladite soupape à tiroir (65) est raccordée au carter de la partie de commande (23) du régulateur de puissance de freinage, qui reçoit ledit piston tandem (19).

4. Régulateur de puissance de freinage selon une quelconque des revendications 2 ou 3, caractérisé en ce que ladite soupape à tiroir (65) est constituée par la soupape d'essai, qui est intégrée sur le régulateur de puissance de freinage, l'élément d'arrêt de ladite soupape d'essai étant prévue à être soumis à l'action de la pression de freinage réglée du régulateur de puissance de freinage à l'encontre de la force d'un ressort, à l'extrémité opposée à la connexion d'essai, pour l'arrêt de la connexion entre lesdits coussins d'air pneumatiques et ledit piston tandem (19).

5. Régulateur de puissance de freinage selon une quelconque des revendicatons 2 à 4, caractérisé en ce que ladite soupape (69), qui est disposée dans la connexion du milieu comprimé entre ladite entrée (1) du régulateur de puissance de freinage et ladite soupape à tiroir (65), est intégrée, de façon structurale, sur le régulateur de puissance de freinage.
